# EUROPÄISCHE PATENTSCHRIFT

(11) **EP 3 597 489 B1**
(45) Veröffentlichungstag und Bekanntmachung des Hinweises auf die Patenterteilung: **05.05.2021**
(21) Anmeldenummer: 19159346.6
(22) Anmeldetag: 26.02.2019
(51) Int. Cl.: B60R 22/02, A61G 3/08

(54) **KRAFTFAHRZEUGSITZ MIT EINEM GURTSYSTEM**
MOTOR VEHICLE SEAT WITH BELT SYSTEM
SIÈGE DE VÉHICULE AUTOMOBILE DOTÉ D'UN SYSTÈME DE CEINTURE

(30) Priorität: 19.07.2018 EP 18184424
(43) Veröffentlichungstag der Anmeldung: 22.01.2020
(73) Patentinhaber: MAGNA STEYR Fahrzeugtechnik AG & Co KG, 8041 Graz (AT)
(72) Erfinder: HOFER, Bernhard, 8053 Graz (AT); PASSEGGER, Wolfgang, 8430 Tillmitsch (AT)
(74) Vertreter: Zangger, Bernd

(56) Entgegenhaltungen:
- EP-A1- 0 614 788
- FR-A1- 2 658 459

## Beschreibung

### Gebiet der Erfindung

Die vorliegende Erfindung betrifft ein Kraftfahrzeugsitz mit einem Gurtsystem.

### Stand der Technik

Es ist bekannt, dass Kraftfahrzeugsitze, also Sitze in einem Kraftfahrzeug, beispielsweise in einem PKW oder in einem Bus, mit Gurtsystemen als Rückhaltesysteme für Insassen des Kraftfahrzeugs, zur Reduzierung der Verletzungsgefahr insbesondere bei einem Unfall des Kraftfahrzeuges, ausgestattet sind. Am weitesten verbreitet sind Dreipunktgurtsysteme, wobei eine Gurtzunge an einem vertikalen Gurt in ein Gurtschloss gesteckt werden kann, das fahrzeugfest, üblicherweise auf einer Höhe zwischen einer Lehne und einer Sitzfläche am Kraftfahrzeugsitz, angeordnet ist. Bekannt sind auch sogenannte H-Gurtsysteme, wobei für einen Insassen zwei vertikale Gurte und auf einer etwa mittleren Höhe der vertikalen Gurte ein horizontaler Verbindungsgurt vorgesehen ist.

Aus der EP 0 614 788 A1 ist eine Vorrichtung bekannt, die dazu bestimmt ist, einen zusätzlichen Sicherheitsgurt für den Rücksitz eines Kraftfahrzeugs zu bilden, das mit nur zwei Sicherheitsgurten ausgestattet ist, wobei die Vorrichtung aus einem abnehmbaren Gurt besteht, der an jedem seiner Enden mit Mitteln zur Befestigung an den Zapfen, männlich oder weiblich, versehen ist, mit denen die beiden im Fahrzeug eingebauten Sicherheitsgurte versehen sind.

### Zusammenfassung der Erfindung

Es ist eine Aufgabe der Erfindung, einen Kraftfahrzeugsitz mit einem Gurtsystem anzugeben, wobei das Gurtsystem flexibel ist, so dass das selbe Gurtsystem für eine Belegung des Kraftfahrzeugsitzes durch eine unterschiedliche Anzahl von Passagieren auf dem Kraftfahrzeugsitz vorbereitet ist und/oder für eine Belegung des Kraftfahrzeugsitzes durch eine unterschiedliche Art von Passagieren auf dem Kraftfahrzeugsitz vorbereitet ist, insbesondere durch Passagiere mit Rollstuhl oder ohne Rollstuhl.

Die Lösung der Aufgabe erfolgt durch einen Kraftfahrzeugsitz mit einem Gurtsystem, wobei das Gurtsystem ein erstes Dreipunktgurtsystem und ein zweites Dreipunktgurtsystem umfasst, wobei mit dem ersten Dreipunktgurtsystem eine erste Person auf dem Kraftfahrzeugsitz anschnallbar ist und wobei mit dem zweiten Dreipunktgurtsystem gleichzeitig eine von der ersten Person verschiedene zweite Person auf dem Kraftfahrzeugsitz anschnallbar ist, wobei das erste Dreipunktgurtsystem dazu ausgebildet ist, über eine Querverbindung mit dem zweiten Dreipunktgurtsystem verbunden zu werden um einen H-Gurt zu bilden, so dass alternativ mittels des H-Gurts eine einzige Person statt der ersten und zweiten Person auf dem Kraftfahrzeugsitz anschnallbar ist, wobei das erste Dreipunktgurtsystem ein erstes oberes Gurtstück und ein erstes unteres Gurtstück umfasst, wobei zwischen dem ersten oberen Gurtstück und dem ersten unteren Gurtstück eine erste Gurtzunge angeordnet ist, wobei das erste Dreipunktgurtsystem ein erstes Gutschloss umfasst zur Aufnahme der ersten Gurtzunge, wobei das zweite Dreipunktgurtsystem ein zweites oberes Gurtstück und ein zweites unteres Gurtstück umfasst, wobei zwischen dem zweiten oberen Gurtstück und dem zweiten unteren Gurtstück eine zweite Gurtzunge angeordnet ist, wobei das zweite Dreipunktgurtsystem ein zweites Gutschloss umfasst zur Aufnahme der zweiten Gurtzunge, wobei zwischen dem ersten oberen Gurtstück und dem ersten unteren Gurtstück die Querverbindung angeordnet ist, wobei die Querverbindung eine dritte Gurtzunge oder ein drittes Gurtschloss aufweist und wobei zwischen dem zweiten oberen Gurtstück und dem zweiten unteren Gurtstück ein passendes Gegenelement, also ein drittes Gurtschloss oder eine dritte Gurtzunge angeordnet ist, wobei der Querverbinder und die erste Gurtzunge an einem gemeinsamen ersten Trägerelement ausgebildet sind.

Erfindungsgemäß umfasst ein Gurtsystem für einen Kraftfahrzeugsitz, der auch breit ausgebildet sein kann und somit eine Bank bilden kann, einerseits zwei vollständige Dreipunktgurtsysteme, so dass zwei Personen auf dem Kraftfahrzeugsitz mittels Dreipunktgurt angeschnallt werden können. Alternativ können aber Teile der Dreipunktgurte verwendet werden, um stattdessen eine Person - bevorzugt zwischen den Sitz-Positionen für welche die Dreipunktgurte vorgesehen sind - mittels H-Gurtsystem anzugurten. Dazu werden der erste Gurt, welcher eine erste Gurtzunge umfasst und der zweite Gurt, welcher eine zweite Gurtzunge umfasst, als vertikale Teile des H-Gurtsystems verwendet und miteinander über einen Querverbinder, insbesondere ein zusätzliches Gurtstück, verbunden.

Erfindungsgemäß umfasst das erste Dreipunktgurtsystem ein erstes oberes Gurtstück und ein erstes unteres Gurtstück, wobei zwischen dem ersten oberen Gurtstück und dem ersten unteren Gurtstück eine erste Gurtzunge angeordnet ist, wobei das erste Dreipunktgurtsystem ein erstes Gutschloss umfasst zur Aufnahme der ersten Gurtzunge, wobei das zweite Dreipunktgurtsystem ein zweites oberes Gurtstück und ein zweites unteres Gurtstück umfasst, wobei zwischen dem zweiten oberen Gurtstück und dem zweiten unteren Gurtstück eine zweite Gurtzunge angeordnet ist, wobei das zweite Dreipunktgurtsystem ein zweites Gutschloss umfasst zur Aufnahme der zweiten Gurtzunge, wobei zwischen dem ersten oberen Gurtstück und dem ersten unteren Gurtstück eine Querverbindung angeordnet ist, wobei die Querverbindung eine dritte Gurtzunge oder ein drittes Gurtschloss aufweist und wobei zwischen dem zweiten oberen Gurtstück und dem zweiten unteren Gurtstück ein passendes Gegenelement, also ein drittes Gurtschloss oder eine dritte Gurtzunge, angeordnet ist.

Am Querverbinder ist dazu entweder eine dritte Gurtzunge, oder alternativ ein drittes Gurtschloss ausgebildet und am anderen Ende, nämlich am zweiten Gurt, ist das passende Gegenstück angeordnet, nämlich ein drittes Gurtschloss oder eine dritte Gurtzunge.

Der Querverbinder und die erste Gurtzunge sind erfindungsgemäß an einem gemeinsamen ersten Trägerelement ausgebildet.

Die zweite Gurtzunge und das dritte Gurtschloss oder alternativ die dritte Gurtzunge können an einem gemeinsamen zweiten Trägerelement ausgebildet sein. Das Trägerelement kann ein am ersten bzw. zweiten Gurt verschiebbares festes Bauteil sein.

Allgemein bedeuten dabei die Bezeichnungen "erstes", "zweites" und "drittes" für die Gurtzungen und Gurtschlösser etc. in dieser Schrift jeweils separate, voneinander verschiedene Bauteile. Das dritte Gegenstück, nämlich eine dritte Gurtzunge, kann jedoch auch von der zweiten Gurtzunge gebildet werden. Wenn die erste Gurtzunge am Querverbinder befestigt ist, kann die dritte Gurtzunge auch durch die erste Gurtzunge gebildet sein.

Bei den Bezeichnungen "oberes" und "unteres" Gurtstück muss es sich nicht um unterscheidbare, voneinander verschiedene Gurte handeln.

Vielmehr werden diese Gurtstücke üblicherweise von einem gemeinsamen Gurt gebildet und sind die zwischen diesen Gurtstücken angeordneten Gurtzungen entlang der jeweiligen Gurte verschiebbar, so dass sich die Längen der "oberen" und "unteren" Gurtstücke laufend verändern können.

Der Kraftfahrzeugsitz und das Gurtsystem sind bevorzugt so angeordnet, dass die Sitzposition der einzigen Person bei Verwendung des Gurtsystems als H-Gurt etwa mittig zwischen den Sitzpositionen der ersten und zweiten Person bei Verwendung des Gurtsystems als zwei Dreipunktgurtsysteme liegt.

Vorzugsweise umfasst die Querverbindung ein drittes Gurtstück und ist die dritte Gurtzunge oder das dritte Gurtschloss an einem Ende des dritten Gurtstücks ausgebildet.

Bevorzugt ist am oberen Ende des ersten Dreipunktgurtsystems, insbesondere des ersten oberen Gurtstücks, ein Gurtroller angeordnet und/oder ist am oberen Ende des zweiten Dreipunktgurtsystems, insbesondere des zweiten oberen Gurtstücks, ein Gurtroller angeordnet.

Bevorzugt sind das erste obere Gurtstück und das erste untere Gurtstück durch einen gemeinsamen ersten Gurt gebildet und /oder das zweite obere Gurtstück und das zweite untere Gurtstück durch einen gemeinsamen zweiten Gurt gebildet.

Bevorzugt ist die erste Gurtzunge verschiebbar zwischen dem ersten oberen Gurtstück und dem ersten unteren Gurtstück angeordnet und/oder ist die zweite Gurtzunge verschiebbar zwischen dem zweiten oberen Gurtstück und dem zweiten unteren Gurtstück angeordnet und/oder ist der Querverbinder, insbesondere das dritte Gurtstück, verschiebbar zwischen dem ersten oberen Gurtstück und dem ersten unteren Gurtstück angeordnet.

Gemäß einer Ausführungsform ist die zweite Gurtzunge zwischen dem zweiten oberen Gurtstück und dem zweiten unteren Gurtstück von einer vertikalen Ausrichtung in eine horizontale Ausrichtung schwenkbar, so dass die zweite Gurtzunge in der horizontalen Ausrichtung die dritte Gurtzunge bildet, wobei die Querverbindung ein drittes Gurtschloss zur Aufnahme der zweiten Gurtzunge in horizontaler Ausrichtung aufweist.

### Kurzbeschreibung der Zeichnungen

Die Erfindung wird im Folgenden beispielhaft unter Bezugnahme auf die Zeichnungen beschrieben.
- Fig. 1: ist eine schematische Darstellung eines erfindungsgemäßen Kraftfahrzeugsitzes mit einem Gurtsystem von vorne in einem ersten Zustand.
- Fig. 2: ist eine schematische Darstellung eines erfindungsgemäßen Kraftfahrzeugsitzes mit einem Gurtsystem gemäß Fig. 1 in einem zweiten Zustand.
- Fig. 3: ist eine schematische Darstellung des Gurtsystems eines erfindungsgemäßen Kraftfahrzeugsitzes.
- Fig. 4: ist eine Teildarstellung des ersten Gurtes des Gurtsystems gemäß Detail X der Fig. 3.
- Fig. 5: ist eine Teildarstellung des zweiten Gurtes des Gurtsystems gemäß Detail Y der Fig. 3.

### Detaillierte Beschreibung der Erfindung

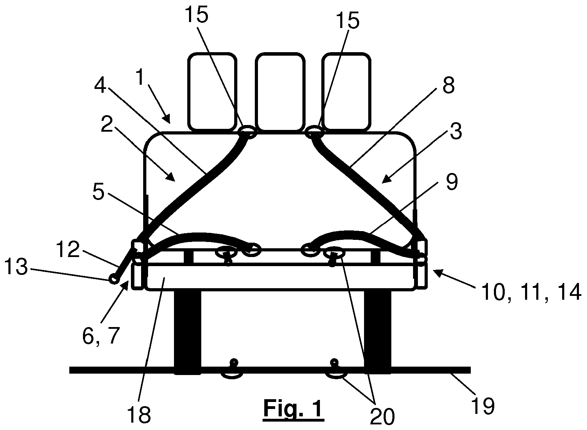

In Fig. 1 ist ein erfindungsgemäßer Kraftfahrzeugsitz mit einem Gurtsystem dargestellt. Der Kraftfahrzeugsitz weist eine Sitzfläche 18 auf, die breit genug ist, so dass zwei Passagiere auf der Sitzfläche 18 sitzen können. Der Kraftfahrzeugsitz ist somit als Bank ausgebildet. Die Sitzfläche 18 befindet sich in der Fig. 1 in einer üblichen Gebrauchsstellung, in der die Sitzfläche 18 horizontal ausgerichtet ist.

Der Kraftfahrzeugsitz 1 ist mit einem Gurtsystem ausgestattet, wobei das Gurtsystem ein erstes Dreipunktgurtsystem 2 für einen ersten Passagier und ein zweites Dreipunktgurtsystem 3 für einen zweiten Passagier umfasst. Das erste Dreipunktgurtsystem 2 umfasst ein erstes oberes Gurtstück 4 und ein erstes unteres Gurtstück 5. Zwischen dem ersten oberen Gurtstück 4 und dem ersten unteren Gurtstück 5 ist eine erste Gurtzunge 6 angeordnet. Das erste Dreipunktgurtsystem 2 umfasst ein erstes Gutschloss 7 zur Aufnahme der ersten Gurtzunge 6. Analog dazu umfasst das zweite Dreipunktgurtsystem 3 ein zweites oberes Gurtstück 8 und ein zweites unteres Gurtstück 9, wobei zwischen dem zweiten oberen Gurtstück 8 und dem zweiten unteren Gurtstück 9 eine zweite Gurtzunge 10 angeordnet ist, wobei das zweite Dreipunktgurtsystem 3 ein zweites Gutschloss 11 umfasst zur Aufnahme der zweiten Gurtzunge 10. Die beiden Dreipunktgurtsysteme 2, 3 sind somit vollständig ausgebildet, zum Angurten von zwei Passagieren.

Am oberen Ende des ersten oberen Gurtstücks 4 sowie am oberen Ende des zweiten oberen Gurtstücks 8 ist jeweils ein Gurtroller 15 angeordnet.

Das erste obere Gurtstück 4 und das erste untere Gurtstück 5 sind durch einen gemeinsamen ersten Gurt gebildet und das zweite obere Gurtstück 8 und das zweite untere Gurtstück 9 sind durch einen gemeinsamen zweiten Gurt gebildet. Die erste Gurtzunge 6 ist verschiebbar am ersten Gurt zwischen dem ersten oberen Gurtstück 4 und dem ersten unteren Gurtstück 5 angeordnet und die zweite Gurtzunge 10 ist verschiebbar am zweiten Gurt zwischen dem zweiten oberen Gurtstück 8 und dem zweiten unteren Gurtstück 9 angeordnet.

Erfindungsgemäß ist zwischen dem ersten oberen Gurtstück 4 und dem ersten unteren Gurtstück 5 eine Querverbindung 12 angeordnet, wobei die Querverbindung 12 eine dritte Gurtzunge 13 (alternativ ein drittes Gurtschloss) aufweist und wobei zwischen dem zweiten oberen Gurtstück 8 und dem zweiten unteren Gurtstück 9 ein passendes Gegenelement, also ein drittes Gurtschloss 14 (alternativ eine dritte Gurtzunge) angeordnet ist.

Genauer umfasst die Querverbindung 12 ein drittes Gurtstück und die dritte Gurtzunge 13 ist an einem Ende des dritten Gurtstücks ausgebildet.

Der Querverbinder 12 ist verschiebbar am ersten Gurt, zwischen dem ersten oberen Gurtstück 4 und dem ersten unteren Gurtstück 5, angeordnet.

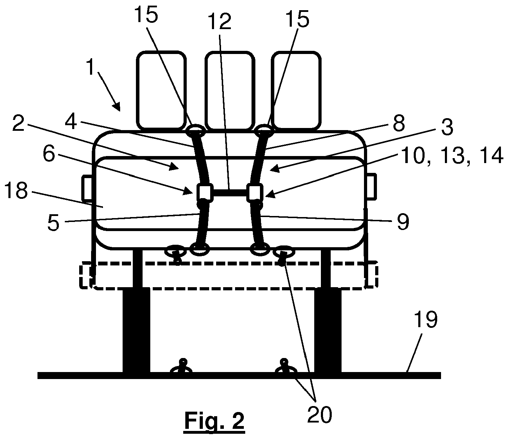

Die dritte Gurtzunge 13 des ersten Dreipunktgurtsystems 2 kann in das dritte Gurtschloss 14 des zweiten Dreipunktgurtsystems 3 gesteckt werden, um einen H-Gurt zu bilden. Siehe hierzu Fig. 2. Durch einen derart geschlossenen H-Gurt kann ein Passagier, insbesondere in einer Sitzposition zwischen den beiden Sitzpositionen von Passagieren die mit den Dreipunktgurtsystemen 2, 3 gesichert sein können, angegurtet sein.

Das erste Dreipunktgurtsystem 2 und somit der Querverbinder 12 ist in der Ansicht von vorne der Fig. 1 bis 5 links dargestellt, natürlich könnte sich der Querverbinder 12 und somit das "erste" Dreipunktgurtsystem 2 auch rechts befinden.

Am Kraftfahrzeugsitz 1 und/oder am Fahrzeugboden 19 im Bereich des Kraftfahrzeugsitzes 1 können Befestigungspunkte 20 zur Befestigung eines Rollstuhls angeordnet sein. Die Befestigungspunkte können ein Teil eines weiteren Gurtsystems sein und können beispielsweise ebenfalls durch Gurtschlösser und/oder Gurtzungen gebildet werden. Die Befestigung eines Rollstuhls im Bereich des Kraftfahrzeugsitzes 1 kann insbesondere in einem Zustand des Kraftfahrzeugsitzes 1 wie er in Fig. 2 dargestellt ist erfolgen.

In diesem Zustand des Kraftfahrzeugsitzes 1, der in Fig. 2 dargestellt ist, ist die Sitzfläche 18 nach oben geschwenkt und befindet sich vertikal, im Wesentlichen parallel zur Lehne des Kraftfahrzeugsitzes 1. Der zuvor von der Sitzfläche 18 eingenommene Raum, der in Fig. 2 gestrichelt dargestellt ist, ist nun frei, so dass ein Rollstuhlfahrer mit seinem Rollstuhl näher an die Lehne und näher an das Gurtsystem des Kraftfahrzeugsitzes 1 heranfahren kann. In diesem Zustand des Kraftfahrzeugsitzes 1 kann somit ein Rollstuhlfahrer auf seinem Rollstuhl sitzend mittels eines H-Gurtsystems am Kraftfahrzeugsitz 1 angegurtet werden.

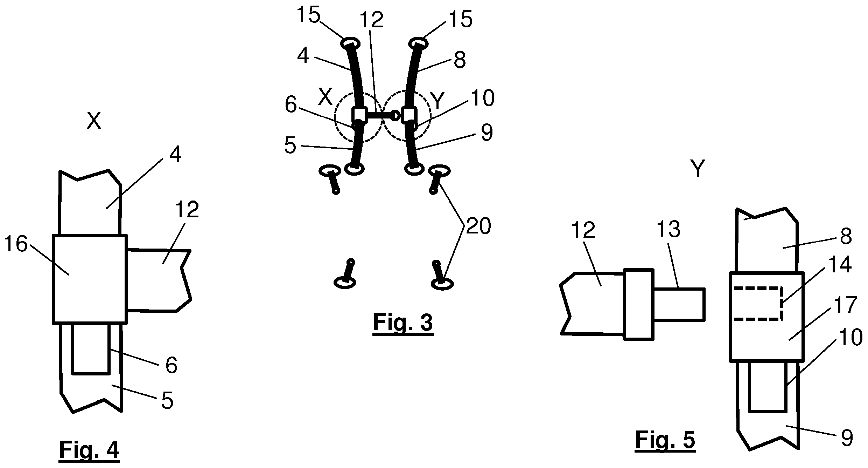

Fig. 3 zeigt schließlich das Gurtsystem eines erfindungsgemäßen Kraftfahrzeugsitzes 1, zusammen mit den Befestigungspunkten 20, die zur Befestigung eines Rollstuhls geeignet sein können. In der Fig. 3 ist die Lage der Details X und Y eingezeichnet, die in den Fig. 4 bzw. Fig. 5 näher dargestellt sind.

Fig. 4 ist eine Teildarstellung des ersten Gurtes des Gurtsystems gemäß Detail X der Fig. 3.

Fig. 5 ist eine Teildarstellung des zweiten Gurtes des Gurtsystems gemäß Detail Y der Fig. 3.

In der in den Fig. 4 und 5 dargestellten Ausführung sind der Querverbinder 12 und die erste Gurtzunge 6 an einem gemeinsamen ersten Trägerelement 16 ausgebildet, welches am ersten Gurt verschiebbar ist. Die zweite Gurtzunge 10 und das dritte Gurtschloss 14 sind an einem gemeinsamen zweiten Trägerelement 17 ausgebildet, das verschiebbar am zweiten Gurt angeordnet ist.

Am Ende des Querverbinders 12, der durch ein Gurtstück ausgebildet ist, befindet sich die dritte Gurtzunge 13. Diese kann im Gurtschloss 14 am zweiten Gurt, nämlich im zweiten Trägerelement 17, eingesteckt werden, um den H-Gurt zu schließen.

Alternativ könnte auch die zweite Gurtzunge 10 zwischen dem zweiten oberen Gurtstück 8 und dem zweiten unteren Gurtstück 9 von einer vertikalen Ausrichtung in eine horizontale Ausrichtung schwenkbar sein um die dritte Gurtzunge 13 auszubilden und am Ende des Querverbinders 12 das dritte Gurtschloss 14 ausgebildet sein, so dass die Gurtzunge 10, 13 in das dritte Gurtschloss 14 am Ende der Querverbindung 12 gesteckt werden kann um den H-Gurt zu schließen.

### Bezugszeichenliste

- 1: Kraftfahrzeugsitz
- 2: erstes Dreipunktgurtsystem
- 3: zweites Dreipunktgurtsystem
- 4: erstes oberes Gurtstück
- 5: erstes unteres Gurtstück
- 6: erste Gurtzunge
- 7: erstes Gutschloss
- 8: zweites oberes Gurtstück
- 9: zweites unteres Gurtstück
- 10: zweite Gurtzunge
- 11: zweites Gutschloss
- 12: Querverbindung
- 13: dritte Gurtzunge
- 14: drittes Gurtschloss
- 15: Gurtroller
- 16: erstes Trägerelement
- 17: zweites Trägerelement
- 18: Sitzfläche
- 19: Fahrzeugboden
- 20: Befestigungspunkt

## Patentansprüche

1. Kraftfahrzeugsitz (1) mit einem Gurtsystem, wobei das Gurtsystem ein erstes Dreipunktgurtsystem (2) und ein zweites Dreipunktgurtsystem (3) umfasst, wobei mit dem ersten Dreipunktgurtsystem (2) eine erste Person auf dem Kraftfahrzeugsitz (1) anschnallbar ist und wobei mit dem zweiten Dreipunktgurtsystem (3) gleichzeitig eine von der ersten Person verschiedene zweite Person auf dem Kraftfahrzeugsitz (1) anschnallbar ist,
wobei das erste Dreipunktgurtsystem (2) dazu ausgebildet ist, über eine Querverbindung (12) mit dem zweiten Dreipunktgurtsystem (3) verbunden zu werden um einen H-Gurt zu bilden, so dass alternativ mittels des H-Gurts eine einzige Person statt der ersten und zweiten Person auf dem Kraftfahrzeugsitz (1) anschnallbar ist, wobei das erste Dreipunktgurtsystem (2) ein erstes oberes Gurtstück (4) und ein erstes unteres Gurtstück (5) umfasst, wobei zwischen dem ersten oberen Gurtstück (4) und dem ersten unteren Gurtstück (5) eine erste Gurtzunge (6) angeordnet ist, wobei das erste Dreipunktgurtsystem (2) ein erstes Gutschloss (7) umfasst zur Aufnahme der ersten Gurtzunge (6), wobei das zweite Dreipunktgurtsystem (3) ein zweites oberes Gurtstück (8) und ein zweites unteres Gurtstück (9) umfasst, wobei zwischen dem zweiten oberen Gurtstück (8) und dem zweiten unteren Gurtstück (9) eine zweite Gurtzunge (10) angeordnet ist, wobei das zweite Dreipunktgurtsystem (3) ein zweites Gutschloss (11) umfasst zur Aufnahme der zweiten Gurtzunge (10), wobei zwischen dem ersten oberen Gurtstück (4) und dem ersten unteren Gurtstück (5) die Querverbindung (12) angeordnet ist, wobei die Querverbindung (12) eine dritte Gurtzunge (13) oder ein drittes Gurtschloss (14) aufweist und wobei zwischen dem zweiten oberen Gurtstück (8) und dem zweiten unteren Gurtstück (9) ein passendes Gegenelement, also ein drittes Gurtschloss (14) oder eine dritte Gurtzunge (13) angeordnet ist, **dadurch gekennzeichnet, dass** der Querverbinder (12) und die erste Gurtzunge (6) an einem gemeinsamen ersten Trägerelement (16) ausgebildet sind.

2. Kraftfahrzeugsitz (1) nach Anspruch 1,
**dadurch gekennzeichnet, dass** der Kraftfahrzeugsitz (1) und das Gurtsystem so angeordnet sind, dass die Sitzposition der einzigen Person bei Verwendung des Gurtsystems als H-Gurt etwa mittig zwischen den Sitzpositionen der ersten und zweiten Person bei Verwendung des Gurtsystems als zwei Dreipunktgurtsysteme liegt.

3. Kraftfahrzeugsitz nach zumindest einem der vorhergehenden Ansprüche,
**dadurch gekennzeichnet, dass** die Querverbindung (12) ein drittes Gurtstück umfasst und die dritte Gurtzunge (13) oder das dritte Gurtschloss (14) an einem Ende des dritten Gurtstücks ausgebildet ist.

4. Kraftfahrzeugsitz nach zumindest einem der vorhergehenden Ansprüche,
**dadurch gekennzeichnet, dass** das erste obere Gurtstück (4) und das erste untere Gurtstück (5) durch einen gemeinsamen ersten Gurt gebildet sind und /oder dass das zweite obere Gurtstück (8) und das zweite untere Gurtstück (9) durch einen gemeinsamen zweiten Gurt gebildet sind.

5. Kraftfahrzeugsitz nach zumindest einem der vorhergehenden Ansprüche,
**dadurch gekennzeichnet , dass** die erste Gurtzunge (6) verschiebbar zwischen dem ersten oberen Gurtstück (4) und dem ersten unteren Gurtstück (5) angeordnet ist und/oder dass die zweite Gurtzunge (10) verschiebbar zwischen dem zweiten oberen Gurtstück (8) und dem zweiten unteren Gurtstück (9) angeordnet ist und/oder dass der Querverbinder (12) verschiebbar zwischen dem ersten oberen Gurtstück (4) und dem ersten unteren Gurtstück (5) angeordnet ist.

6. Kraftfahrzeugsitz nach zumindest einem der vorhergehenden Ansprüche,
**dadurch gekennzeichnet , dass** die zweite Gurtzunge (10) und das dritte Gurtschloss (14) oder die dritte Gurtzunge an einem gemeinsamen zweiten Trägerelement (17) ausgebildet sind.

7. Kraftfahrzeugsitz nach zumindest einem der vorhergehenden Ansprüche,
**dadurch gekennzeichnet , dass** die zweite Gurtzunge (10) zwischen dem zweiten oberen Gurtstück (8) und dem zweiten unteren Gurtstück (9) von einer vertikalen Ausrichtung in eine horizontale Ausrichtung schwenkbar ist, so dass die zweite Gurtzunge (10) in der horizontalen Ausrichtung die dritte Gurtzunge (13) bildet, wobei die Querverbindung ein drittes Gurtschloss (14) zur Aufnahme der zweiten Gurtzunge (13) in horizontaler Ausrichtung aufweist.

8. Kraftfahrzeugsitz nach zumindest einem der vorhergehenden Ansprüche,
**dadurch gekennzeichnet , dass** am oberen Ende des ersten Dreipunktgurtsystems (2), insbesondere des oberen Gurtstücks (4), ein Gurtroller (15) angeordnet ist und/oder dass am oberen Ende des zweiten Dreipunktgurtsystem (3), insbesondere des zweiten oberen Gurtstücks (8), ein Gurtroller (15) angeordnet ist.

## Claims

1. Motor vehicle seat (1) with a belt system, wherein the belt system comprises a first three-point belt system (2) and a second three-point belt system (3), wherein a first person can be buckled up on the motor vehicle seat (1) with the first three-point belt system (2), and wherein at the same time a second person different from the first person can be buckled up on the motor vehicle seat (1) with the second three-point belt system (3), wherein the first three-point belt system (2) is designed to be connected to the second three-point belt system (3) via a transverse connection (12) in order to form an H belt, and therefore alternatively a single person instead of the first and second person can be buckled up on the motor vehicle seat (1) by means of the H belt, wherein the first three-point belt system (2) comprises a first upper belt piece (4) and a first lower belt piece (5), wherein a first belt tongue (6) is arranged between the first upper belt piece (4) and the first lower belt piece (5), wherein the first three-point belt system (2) comprises a first belt buckle (7) for receiving the first belt tongue (6), wherein the second three-point belt system (3) comprises a second upper belt piece (8) and a second lower belt piece (9), wherein a second belt tongue (10) is arranged between the second upper belt piece (8) and the second lower belt piece (9), wherein the second three-point belt system (3) comprises a second belt buckle (11) for receiving the second belt tongue (10), wherein the transverse connection (12) is arranged between the first upper belt piece (4) and the first lower belt piece (5), wherein the transverse connection (12) has a third belt tongue (13) or a third belt buckle (14), and wherein a suitable counter element, i.e. a third belt buckle (14) or a third belt tongue (13), is arranged between the second upper belt piece (8) and the second lower belt piece (9),
**characterized in that** the transverse connector (12) and the first belt tongue (6) are formed on a common first carrier element (16).

2. Motor vehicle seat (1) according to Claim 1,
**characterized in that** the motor vehicle seat (1) and the belt system are arranged in such a manner that the sitting position of the single person during use of the belt system as an H belt is located approximately centrally between the sitting positions of the first and second person during use of the belt system as two three-point belt systems.

3. Motor vehicle seat according to at least one of the preceding claims,
**characterized in that** the transverse connection (12) comprises a third belt piece, and the third belt tongue (13) or the third belt buckle (14) is formed at one end of the third belt piece.

4. Motor vehicle seat according to at least one of the preceding claims,
**characterized in that** the first upper belt piece (4) and the first lower belt piece (5) are formed by a common first belt, and/or **in that** the second upper belt piece (8) and the second lower belt piece (9) are formed by a common second belt.

5. Motor vehicle seat according to at least one of the preceding claims,
**characterized in that** the first belt tongue (6) is arranged displaceably between the first upper belt piece (4) and the first lower belt piece (5), and/or in that the second belt tongue (10) is arranged displaceably between the second upper belt piece (8) and the second lower belt piece (9), and/or **in that** the transverse connector (12) is arranged displaceably between the first upper belt piece (4) and the first lower belt piece (5).

6. Motor vehicle seat according to at least one of the preceding claims,
**characterized in that** the second belt tongue (10) and the third belt buckle (14) or the third belt tongue are formed on a common second carrier element (17) .

7. Motor vehicle seat according to at least one of the preceding claims,
**characterized in that** the second belt tongue (10) is pivotable between the second upper belt piece (8) and the second lower belt piece (9) from a vertical orientation into a horizontal orientation such that, in the horizontal orientation, the second belt tongue (10) forms the third belt tongue (13), wherein the transverse connection has a third belt buckle (14) for receiving the second belt tongue (13) in the horizontal orientation.

8. Motor vehicle seat according to at least one of the preceding claims,
**characterized in that** a belt roller (15) is arranged at the upper end of the first three-point belt system (2), in particular of the upper belt piece (4), and/or **in that** a belt roller (15) is arranged at the upper end of the second three-point belt system (3), in particular of the second upper belt piece (8).

## Revendications

1. Siège de véhicule automobile (1) doté d'un système de ceinture, le système de ceinture comportant un premier système de ceinture à trois points (2) et un deuxième système de ceinture à trois points (3), une première personne pouvant s'attacher sur le siège de véhicule automobile (1) à l'aide du premier système de ceinture à trois points (2) et simultanément une deuxième personne différente de la première personne pouvant s'attacher sur le siège de véhicule automobile (1) à l'aide du deuxième système de ceinture à trois points (3),
le premier système de ceinture à trois points (2) étant réalisé pour être relié au deuxième système de ceinture à trois points (3) par le biais d'une liaison transversale (12) afin de former une ceinture en H, de sorte qu'en variante, au moyen de la ceinture en H, une seule personne au lieu de la première et de la deuxième personne puisse s'attacher sur le siège de véhicule automobile (1), le premier système de ceinture à trois points (2) comportant un premier morceau de ceinture supérieur (4) et un premier morceau de ceinture inférieur (5), une première languette de ceinture (6) étant disposée entre le premier morceau de ceinture supérieur (4) et le premier morceau de ceinture inférieur (5), le premier système de ceinture à trois points (2) comportant une première attache de ceinture (7) pour la réception de la première languette de ceinture (6), le deuxième système de ceinture à trois points (3) comportant un deuxième morceau de ceinture supérieur (8) et un deuxième morceau de ceinture inférieur (9), une deuxième languette de ceinture (10) étant disposée entre le deuxième morceau de ceinture supérieur (8) et le deuxième morceau de ceinture inférieur (9), le deuxième système de ceinture à trois points (3) comportant une deuxième attache de ceinture (11) pour la réception de la deuxième languette de ceinture (10), la liaison transversale (12) étant disposée entre le premier morceau de ceinture supérieur (4) et le premier morceau de ceinture inférieur (5), la liaison transversale (12) comprenant une troisième languette de ceinture (13) ou une troisième attache de ceinture (14) et un élément conjugué adapté, c'est-à-dire une troisième attache de ceinture (14) ou une quatrième languette de ceinture (13), étant disposé entre le deuxième morceau de ceinture supérieur (8) et le deuxième morceau de ceinture inférieur (9), **caractérisé en ce que** le connecteur transversal (12) et la première languette de ceinture (6) sont réalisés sur un premier élément de support (16) commun.

2. Siège de véhicule automobile (1) selon la revendication 1,
**caractérisé en ce que** le siège de véhicule automobile (1) et le système de ceinture sont disposés de telle sorte que la position d'assise de la seule personne en cas d'utilisation du système de ceinture comme ceinture en H se situe approximativement centralement entre les positions d'assise de la première et de la deuxième personne en cas d'utilisation du système de ceinture comme systèmes de ceinture à trois points.

3. Siège de véhicule automobile selon au moins l'une des revendications précédentes,
**caractérisé en ce que** la liaison transversale (12) comporte un troisième morceau de ceinture et la troisième languette de ceinture (13) ou la troisième attache de ceinture (14) est réalisée à une extrémité du troisième morceau de ceinture.

4. Siège de véhicule automobile selon au moins l'une des revendications précédentes,
**caractérisé en ce que** le premier morceau de ceinture supérieur (4) et le premier morceau de ceinture inférieur (5) sont formés par une première ceinture commune et/ou en ce que le deuxième morceau de ceinture supérieur (8) et le deuxième morceau de ceinture inférieur (9) sont formés par une deuxième ceinture commune.

5. Siège de véhicule automobile selon au moins l'une des revendications précédentes,
**caractérisé en ce que** la première languette de ceinture (6) est disposée de manière déplaçable entre le premier morceau de ceinture supérieur (4) et le premier morceau de ceinture inférieur (5) et/ou **en ce que** la deuxième languette de ceinture (10) est disposée de manière déplaçable entre le deuxième morceau de ceinture supérieur (8) et le deuxième morceau de ceinture inférieur (9) et/ou **en ce que** le connecteur transversal (12) est disposé de manière déplaçable entre le premier morceau de ceinture supérieur (4) et le premier morceau de ceinture inférieur (5).

6. Siège de véhicule automobile selon au moins l'une des revendications précédentes,
**caractérisé en ce que** la deuxième languette de ceinture (10) et la troisième attache de ceinture (14) ou la troisième languette de ceinture sont réalisées sur un deuxième élément de support (17) commun.

7. Siège de véhicule automobile selon au moins l'une des revendications précédentes,
**caractérisé en ce que** la deuxième languette de ceinture (10) peut être pivotée d'une orientation verticale à une orientation horizontale entre le deuxième morceau de ceinture supérieur (8) et le deuxième morceau de ceinture inférieur (9), de sorte que la deuxième languette de ceinture (10) forme la troisième languette de ceinture (13) dans l'orientation horizontale, la liaison transversale comprenant une troisième attache de ceinture (14) pour la réception de la deuxième languette de ceinture (13) dans l'orientation horizontale.

8. Siège de véhicule automobile selon au moins l'une des revendications précédentes,
**caractérisé en ce qu'**un enrouleur de ceinture (15) est disposé à l'extrémité supérieure du premier système de ceinture à trois points (2), en particulier du morceau de ceinture supérieur (4), et/ou **en ce qu'**un enrouleur de ceinture (15) est disposé à l'extrémité supérieure du deuxième système de ceinture à trois points (3), en particulier du deuxième morceau de ceinture supérieur (8).
